Europäisches Patentamt

European Patent Office

Office européen des brevets

(19)

(11) Numéro de publication: **0 292 347**
**B1**

(12) **FASCICULE DE BREVET EUROPEEN**

(45) Date de publication du fascicule du brevet:
**12.09.90**

(51) Int. Cl.⁵: **F02N 15/02**

(21) Numéro de dépôt: **88401040.6**

(22) Date de dépôt: **28.04.88**

(54) Lanceur de démarreur à roue libre comportant un limiteur de couple.

(30) Priorité: **21.05.87 FR 8707355**

(43) Date de publication de la demande:
**23.11.88 Bulletin 88/47**

(45) Mention de la délivrance du brevet:
**12.09.90 Bulletin 90/37**

(84) Etats contractants désignés:
**DE ES GB IT**

(56) Documents cités:
**DE-A- 2 654 987**
**GB-A- 2 085 970**

(73) Titulaire: **VALEO EQUIPEMENTS ELECTRIQUES MOTEUR, 2, Rue André Boulle, F-94000 Creteil(FR)**

(72) Inventeur: **Froment, Francis, 8, rue de Nazareth, F-69003 Lyon(FR)**

(74) Mandataire: **Gamonal, Didier, Société VALEO Service Propriété Industrielle 30, rue Blanqui, F-93406 Saint Ouen(FR)**

ACTORUM AG

**Description**

La présente invention est relative à des perfectionnements apportés aux lanceurs de démarreur pour moteur à combustion interne du genre comportant une roue libre.

Les lanceurs du genre en question ont l'inconvénient de présenter une durée de vie relativement courte de leur roue libre lorsque le moteur à combustion interne fonctionne mal, par exemple s'il existe de fréquents retours d'allumage, des blocages mécaniques, etc... ou qu'on assiste à des chocs consécutifs des organes disposés en amont et en aval du lanceur.

Ces anomalies entraînent des couples supérieurs à la valeur de celui maximal produit par le moteur du démarreur, de sorte que le coincement des galets entre la cage extérieure de la roue libre et sa piste intérieure s'effectue sous une charge trop importante qui détériore lesdites cage et piste.

Avant l'application d'une roue libre au lanceur d'un démarreur, il était déjà prévu d'équiper celui-ci d'un dispositif d'embrayage et de débrayage automatique remplaçant la roue libre, mais bien entendu le résultat obtenu est beaucoup moins intéressant que celui auquel on arrive en utilisant une telle roue libre. Un système d'embrayage de ce genre a été décrit dans le brevet français 805.562 du 30 avril 1936.

Depuis que l'on utilise de manière courante une roue libre à galets pour libérer le pignon d'entraînement d'un démarreur de la grande couronne du moteur thermique lorsque le lancement de ce dernier intervient, on n'a jamais trouvé le moyen d'éviter les inconvénients cités plus haut.

La présente invention vise à remédier aux inconvénients considérés des lanceurs à roue libre, et à permettre la réalisation d'un lanceur qui réponde particulièrement bien aux desiderata de la technique.

Dans le lanceur suivant l'invention, la cage à cames de la roue libre et la douille d'entraînement du lanceur sont réalisés en deux éléments distincts assemblés entre eux par des moyens de friction qui limitent le couple transmis entre la piste intérieure et la cage extérieure de la roue libre.

La douille comprend une bride périphérique pénétrant avec jeu fonctionnel dans une portée de la cage de la roue libre, tandis que l'extérieur de la douille comporte des moyens de retenue angulaire d'une rondelle d'entraînement appuyant une garniture de friction contre la cage sous l'effet de moyens élastiques.

Le dessin annexé, donné à titre d'exemple, permettra de mieux comprendre l'invention, les caractéristiques qu'elle présente et les avantages qu'elle est susceptible de procurer :

- la figure 1 est une coupe longitudinale d'un lanceur établi conformément à l'invention ;
- la figure 2 est une vue semblable à celle de la figure 1, mais montrant une variante ;
- la figure 3 illustre la manière dont on peut allonger la portée de la douille d'entraînement du lanceur suivant l'invention en l'imbriquant dans la piste intérieure de sa roue libre. Bien que la représentation illustrée dans cette figure se rapporte au mode d'exécution de la figure 2, il pourrait tout aussi bien s'appliquer à la figure 1.

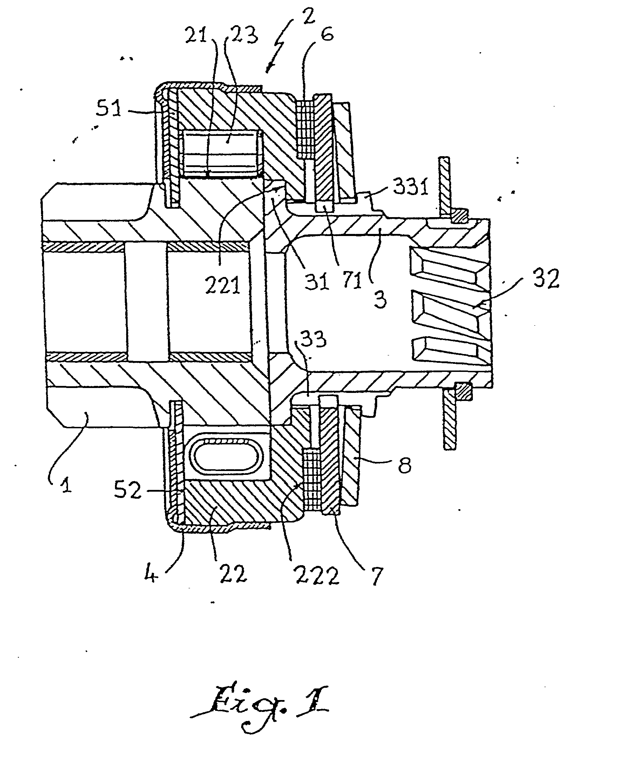

Le lanceur de démarreur électrique pour moteur à combustion interne représenté sur la figure 1 comprend un pignon de lancement 1 dont la partie arrière constitue la piste 21 d'une roue libre 2 dont la cage à cames 22 est associée de manière tournante à une douille d'entraînement 3. Bien entendu, entre la piste 21 et la cage 22 se trouve à la manière usuelle une série de galets chargés 23 ; il est donc inutile de décrire plus en détail dans les présentes une telle roue libre.

La périphérie de la cage 22 est à deux diamètres de manière à retenir axialement un capot d'assemblage 4, comme on l'expliquera mieux plus loin. Comme cela est bien connu, ce capot 4 maintient deux demi-rondelles 51,52 assurant la fermeture et l'étanchéité de la roue libre 2. La cage 22 comprend un chambrage 221 de forme annulaire dans lequel vient s'engager une bride 31 de la douille 3. Ainsi, le capot 4 maintient-il assemblés la douille 3 de la cage 22 et le pignon 1, la bride 31 pouvant alors tourner librement par rapport à la cage et au pignon.

Le lanceur est monté à coulissement par rapport à un arbre non représenté comportant des cannelures hélicoïdales propres à engrener avec une denture de même forme 32 portée par l'alésage de la douille 3 à la manière connue.

La face arrière de la cage 22, c'est-à-dire celle tournée vers la douille 3, comporte une portée 222 dans laquelle est collée ou fixée de toute autre manière une couronne de friction ou garniture 6 réalisée en toute matière appropriée.

Le pourtour de la douille 3 comporte sur une partie de sa longueur des cannelures mâles 33 prévues droites et qui s'engagent dans une denture de même forme 71 prévue dans l'alésage d'une rondelle d'entraînement 7 prenant appui contre la garniture 6.

Une rondelle Belleville 8 est également engagée autour des cannelures 33. L'extrémité libre de celles-ci est refoulée pour former une collerette 331 destinée à maintenir en pression la rondelle Belleville 8 contre la rondelle d'entraînement 7. Ainsi, en déterminant la tension de la rondelle Belleville 8, on règle la pression d'appui et par conséquent le couple d'entraînement de la cage 22 et de la douille 3.

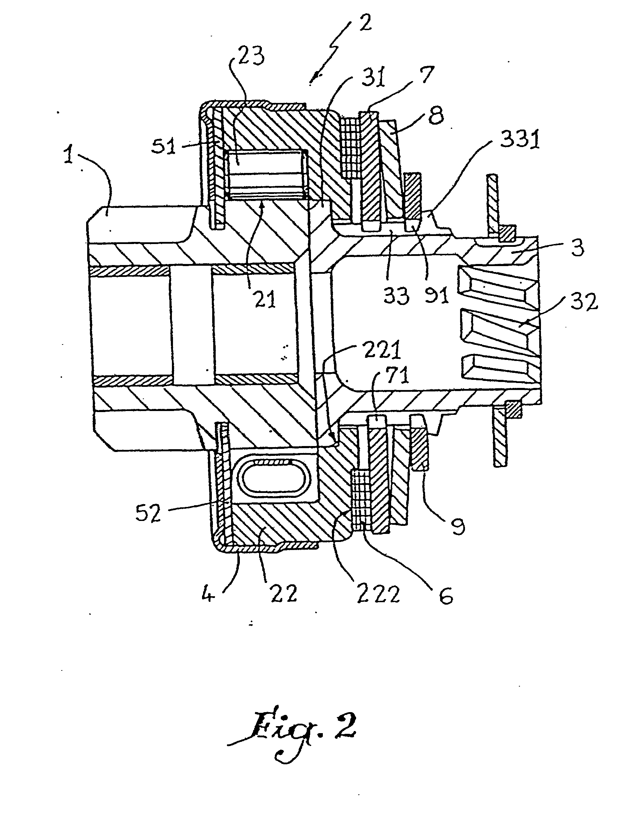

Le mode de réalisation illustré en figure 2 prévoit d'utiliser, pour charger la rondelle Belleville 8, une bague annulaire plate 9 dont l'alésage porte des crans 91 coopérant avec les cannelures 33 de la périphérie de la douille 3. Autour de son alésage la face extérieure de la bague 9 est chanfreinée afin que le sertissage 331 s'applique parfaitement bien sur cette bague.

En fonctionnement en marche normale, la cage 22 et la douille sont solidarisées par l'appui du disque d'entraînement 7 contre la garniture 6, de sorte que ces deux organes se comportent comme s'ils ne faisaient qu'une seule et même pièce. Par contre, si des efforts supérieurs à ceux normaux se font jour, par exemple si le couple résistant appliqué au pignon 1 est supérieur au couple moteur appliqué à la douille 3, le système élastique à frottement agit comme un limiteur de couple. On évite ainsi soit de provoquer des surchauffes du moteur électrique d'entraînement du démarreur, soit la détérioration de la piste et/ou de la cage à cames de la roue libre 2.

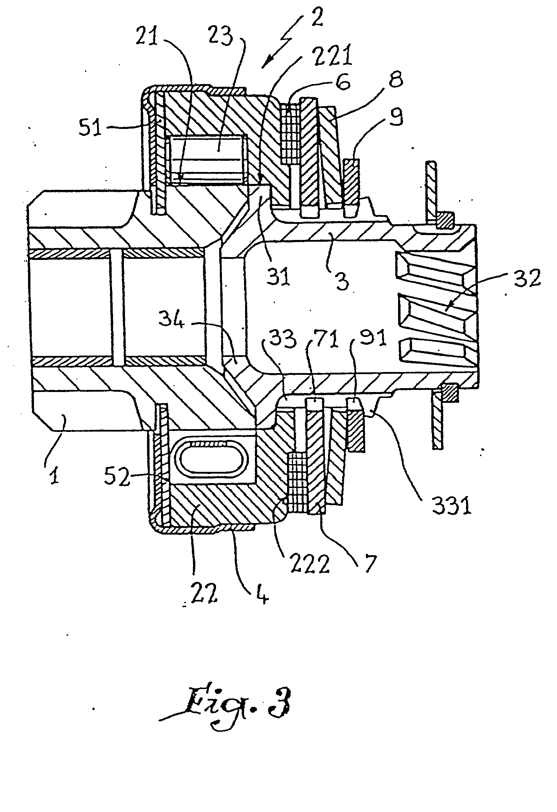

La douille 3, comme illustré en figure 3, peut comprendre un prolongement axial 34 s'imbriquant dans la piste intérieure 21 de manière à rapprocher l'extrémité libre de la douille par rapport à la roue libre, ce qui entraîne une diminution de longueur totale du lanceur et par conséquent du démarreur. Bien entendu, cette pénétration de la douille sous la forme d'action de la piste 21 diminue la résistance de celle-ci, mais cette diminution ne présente aucun inconvénient du fait de la présence du limiteur de couple suivant l'invention.

Le lanceur, ainsi réalisé, permet un dimensionnement plus juste de tous les éléments de la chaîne cinématique de la transmission de puissance, ce qui conduit généralement à un allègement et à une réduction d'encombrement.

La couronne de friction ou garniture 6 pourrait être associée de toute autre manière à la cage 22, par exemple par des cannelures ménagées sur la portée 222. Elle pourrait aussi coopérer avec le capot 4 au moyen de facettes extérieures la maintenant angulairement fixe par suite de sa coopération avec le capot lors de sa rétreinte radiale. La garniture 6 pourrait aussi être assujettie de manière appropriée au disque 7, la friction s'effectuant contre la portée 222 de la cage 22.

**Revendications**

1) Lanceur de démarreur pour moteur à combustion interne du genre comportant une roue libre (2) dont la cage à cames (22) est solidaire de sa douille d'entraînement (3), tandis que sa piste intérieure est d'une pièce avec pignon de lancement (1), lesquelles cage (22) et douille (3) sont réalisées en deux éléments distincts assemblés entre eux par des moyens de friction (6,7,8) en vue de limiter le couple transmis à la douille (3) qui la porte par la roue libre (2) ou vice-versa, caractérisé en ce que la douille (3) comprend une bride périphérique (31) pénétrant avec jeu fonctionnel dans un chambrage (221) de la cage (22), et en ce que l'extérieur de la douille (3) comporte des moyens de retenue angulaire (33) d'un disque d'entraînement (7) appuyant une garniture de friction (6) contre la cage (22) sous l'effet de moyens élastiques (8).

2) Lanceur suivant la revendication 1, caractérisé en ce que la périphérie de la douille (3) est pourvue de cannelures (33) en prise avec des dents du disque d'entraînement (7), une collerette (331) étant réalisée sur la Périphérie de la douille (3) en vue de constituer butée pour une rondelle Belleville (8) mise ainsi sous tension pour appuyer contre le disque d'entraînement (7).

3) Lanceur suivant la revendication 2, caractérisé en ce qu'un anneau plat (9) dont l'alésage est cranté pour se trouver en prise avec les cannelures (33) de la douille est interposé entre la collerette (331) de la douille (3) et la rondelle Belleville (8).

4) Lanceur suivant l'une quelconque des revendications précédentes, caractérisé en ce que sa douille d'entraînement comporte un prolongement axial (34) qui pénètre dans la piste intérieure (21) de la roue libre (2).

**Claims**

1. A starter head for an internal combustion engine, of the kind including a free wheel (2), the cam cage (22) of which is in cooperation with its drive sleeve (3), while its inner rolling element is integral with the starter pinion (1), the said cage (22) and sleeve (3) being made as two distinct elements which are assembled together through friction means (6, 7, 8) so as to limit the torque which is transmitted through the free wheel (2) to the drive sleeve (3) which carries the cage, or vice versa, characterised in that the sleeve (3) includes a peripheral flange (31) which extends with an operating clearance into a rebate (221) of the cage (22), and in that the exterior of the sleeve (3) includes means (33) for retaining against rotational movement a drive ring (7) which applies a friction liner (6) against the cage (22) under the influence of resilient means (8).

2. A starter head according to Claim 1, characterised in that the periphery of the sleeve (3) is provided with splines (33) which are in engagement with teeth of the drive disc (7), a collar portion (331) being formed on the periphery of the sleeve (3) so as to act as an end stop for a Belleville ring (8), which is thereby put in tension so as to bear against the drive disc (7).

3. A starter head according to Claim 2, characterised in that a flat ring (9), the bore of which is indented for engagement thereof with the splines (33) of the sleeve, is interposed between the collar portion (331) of the sleeve (3) and the Belleville ring (8).

4. A starter head according to any one of the preceding Claims, characterised in that its drive sleeve includes an axial extension portion (34) which extends into the inner rolling element (21) of the free wheel (2).

**Patentansprüche**

1. Anlasser für Verbrennungsmotor von der Art, die einen Freilauf (2) enthält, dessen Nockenkäfig (22) fest mit der Antriebshülse (3) verbunden ist, während die Innenbahn aus einem Stück mit dem Anlasserritzel (1) ausgebildet ist, wobei der Käfig (22) und die Hülse (3) aus zwei verschiedenen Elementen bestehen, die miteinander durch Reibmittel (6, 7, 8) verbunden sind, um das vom Freilauf (2) auf die Hülse (3) übertragene Moment zu begrenzen oder umgekehrt, dadurch gekennzeichnet, daß die Hülse (3) einen Umfangsflansch (31) aufweist, der mit einem funktionsbedingten Spiel in eine Kammer (221) des Käfigs (22) hineinragt, und daß an der Außenseite der Hülse (3) Winkelhalterungen (33) für eine Mitnehmerscheibe (7) vorgesehen sind, wodurch unter Einwirkung elastischer Mittel (8) ein Reibbelag (6) gegen den Käfig (22) gedrückt wird.

2. Anlasser nach Anspruch 1, dadurch gekennzeichnet, daß der Kreisumfang der Hülse (3) mit Riffelungen (33) versehen ist, die mit Zähnen in der Mitnehmerscheibe (7) in Eingriff stehen, wobei am Umfang der Hülse (3) ein Kragen (331) vorgesehen ist, der als Anschlag für eine Tellerfeder (8) dient, die auf diese Weise unter Spannung gesetzt wird und an der Mitnehmerscheibe (7) anliegt.

3. Anlasser nach Anspruch 2, dadurch gekennzeichnet, daß zwischen dem Kragen (331) der Hülse (3) und der Tellerfeder (8) ein Flachring (9) eingesetzt ist, dessen Bohrung mit einer Einkerbung versehen ist, die einen Eingriff mit den Riffelungen (33) der Hülse ermöglicht.

4. Anlasser nach einem der vorherigen Ansprüche, dadurch gekennzeichnet, daß die Mitnehmerhülse eine axiale Verlängerung (34) aufweist, die in die Innenbahn (21) des Freilaufs (2) eindringt.

Fig. 1

*Fig. 2*

*Fig. 3*